(19) Europäisches Patentamt
European Patent Office
Office européen des brevets

(11) **EP 4 621 530 A1**

(12) **EUROPEAN PATENT APPLICATION**
published in accordance with Art. 153(4) EPC

(43) Date of publication:
**24.09.2025 Bulletin 2025/39**

(21) Application number: **23909402.2**

(22) Date of filing: **26.09.2023**

(51) International Patent Classification (IPC):
**G06F 1/3234** (2019.01)   **G06F 9/50** (2006.01)
**G06F 11/30** (2006.01)

(52) Cooperative Patent Classification (CPC):
**G06F 1/3234; G06F 9/50; G06F 11/30**

(86) International application number:
**PCT/CN2023/121414**

(87) International publication number:
**WO 2024/139467 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 CN 202211676674**

(71) Applicant: **Huawei Technologies Co., Ltd.
Shenzhen, Guangdong 518129 (CN)**

(72) Inventors:
• **WU, Haotian
Shenzhen, Guangdong 518129 (CN)**
• **QUE, Yanwen
Shenzhen, Guangdong 518129 (CN)**
• **JIANG, Yi
Shenzhen, Guangdong 518129 (CN)**

(74) Representative: **Gill Jennings & Every LLP
The Broadgate Tower
20 Primrose Street
London EC2A 2ES (GB)**

(54) **FREQUENCY SCALING METHOD AND APPARATUS, AND PROCESSOR, CHIP AND COMPUTER DEVICE**

(57)     A frequency adjustment method and apparatus, a processor, a chip, and a computer device are provided, and relate to the computer field. The method includes: A server obtains a load average and a PMU status in a frequency adjustment domain; and the server adjusts a frequency of a processor core in the frequency adjustment domain based on the load average and the PMU status, where the load average indicates an average of load values of all processor cores in the frequency adjustment domain when different processor cores execute tasks, and the PMU status indicates whether a running value of a PMU event reported by the processor core in the frequency adjustment domain reaches a threshold corresponding to the PMU event.

FIG. 3A

TO FIG. 3B

EP 4 621 530 A1

CONT. FORM FIG. 3A

**Actual frequency adjustment procedure**

308: The server starts a third task

309: The server determines respective estimated load values (that is, N estimated load values) of N processor cores in a frequency adjustment domain based on a load estimation algorithm

310: The server inputs the N estimated load values into the error function, to obtain errors respectively corresponding to the N estimated load values, and corrects the N estimated load values based on the errors respectively corresponding to the N estimated load values, to obtain N corrected estimated load values

311: The server uses an average of the N corrected estimated load values as a load average in the frequency adjustment domain

312: The server determines whether a quantity of times or a ratio of reporting the PMU event by the processor core in the frequency adjustment domain reaches the threshold corresponding to the PMU event, to determine whether the computing performance of the server is in a bottleneck state

313: The server updates a bottleneck count parameter based on whether the computing performance of the server is in the bottleneck state

314: The server determines a target frequency of the processor core in the frequency adjustment domain based on an updated bottleneck count parameter and the load average

315: The server performs frequency adjustment on the processor core in the frequency adjustment domain based on the target frequency

FIG. 3B

**Description**

CROSS-REFERENCE TO RELATED APPLICATIONS

This application claims priority to Chinese Patent Application No. 202211676674.4, filed with the China National Intellectual Property Administration on December 26, 2022 and entitled "FREQUENCY ADJUSTMENT METHOD AND APPARATUS, PROCESSOR, CHIP, AND COMPUTER DEVICE", which is incorporated herein by reference in its entirety.

TECHNICAL FIELD

This application relates to the field of computer technologies, and in particular, to a frequency adjustment method and apparatus, a processor, a chip, and a computer device.

BACKGROUND

As super computing clusters are used in high-computing scenarios such as supercomputing centers, how to reduce power consumption of a server and improve an energy efficiency ratio of the server has been a hot topic studied in the computer field. Power consumption of a processor usually accounts for more than 50% of power consumption of the entire server. In addition, the power consumption of the processor greatly increases as a frequency of a processor core (core) increases. In this way, the power consumption of the processor may be reduced by adjusting the frequency of the processor core.

Dynamic voltage and frequency scaling (dynamic voltage and frequency scaling, DVFS) is a technology that can be used for adjusting the frequency of the processor core based on a characteristic of a change of a load value of the processor core. However, the power consumption cannot be properly reduced by adjusting the frequency of the processor core only based on the change of the load value of the processor core.

SUMMARY

This application provides a frequency adjustment method and apparatus, a processor, a chip, and a computer device, to effectively perform frequency adjustment on a processor core. This helps improve an energy efficiency ratio of a server.

According to a first aspect, this application provides a frequency adjustment method, where the method is performed by a server, and the method includes: The server obtains a load average and a performance monitoring unit (performance monitoring unit, PMU) status in a frequency adjustment domain. The server adjusts a frequency of a processor core in the frequency adjustment domain based on the load average and the PMU status. The load average indicates an average of load values of all processor cores in the frequency adjustment domain when different processor cores execute tasks, and the PMU status indicates whether a running value of a PMU event reported by the processor core in the frequency adjustment domain reaches a threshold corresponding to the PMU event. In the foregoing technical solution, the server comprehensively considers the load average and the PMU status in the frequency adjustment domain, and adjusts the frequency of the processor core in the frequency adjustment domain based on the load average and the PMU status in the frequency adjustment domain. This helps adjust the frequency of the processor core to be in a status that matches an actual load value of the processor core, that is, improve the energy efficiency ratio of the server. Further, the server obtains the load average in the frequency adjustment domain. This helps avoid a case in which frequency reduction of another processor core is affected when an estimated load value of one processor core (or several processor cores) is greater than an estimated load value of the another processor core in the frequency adjustment domain. The server determines, with reference to the PMU status in the frequency adjustment domain, to adjust the frequency of the processor core in the frequency adjustment domain. This helps avoid a case in which the frequency of the processor core is further increased when the running value of the PMU event reported by the processor core in the frequency adjustment domain has reached the threshold corresponding to the PMU event (that is, computing performance of the server has reached a performance bottleneck), thereby causing unnecessary power consumption waste. This helps further improve the energy efficiency ratio of the server.

In a possible implementation, when the server adjusts the frequency of the processor core based on the load average and the PMU status, the method may be specifically: The server updates a bottleneck count parameter based on the PMU status, to obtain an updated bottleneck count parameter. Then, the server determines a target frequency of the processor core in the frequency adjustment domain based on an updated bottleneck count parameter and the load average. The server adjusts the frequency of the processor core in the frequency adjustment domain based on the target frequency. In the foregoing technical solution, the server updates the bottleneck count parameter based on the PMU status, and determines the target frequency by using the bottleneck count parameter and the load average. This helps avoid a case in which the frequency of the processor core is further increased when the server has reached the performance bottleneck, thereby causing the unnecessary power consumption waste. This helps further improve the energy efficiency ratio of the server.

In a possible implementation, when the server updates the bottleneck count parameter based on the PMU status, the method may be specifically: The server increases the bottleneck count parameter when determining that the PMU status indicates that the running value of the PMU event reported by the processor core in the frequency adjustment domain reaches the threshold corresponding to the PMU event; and/or the server decreases the bottleneck count parameter when determining that the PMU status indicates that the running value of the PMU event reported by the processor core in the frequency adjustment domain does not reach the threshold corresponding to the PMU event. The target frequency of the processor core in the frequency adjustment domain decreases as the bottleneck count parameter increases, and the target frequency of the processor core in the frequency adjustment domain increases as the bottleneck count parameter decreases. In the foregoing technical solution, the server adjusts the bottleneck count parameter to be increased or decreased, to decrease or increase the frequency of the processor core. This helps enable the processor frequency to match the actual load value of the processor core.

In a possible implementation, a total quantity of levels of the frequency of the processor core in the frequency adjustment domain is m, a frequency corresponding to a higher level is higher than a frequency corresponding to a lower level in any two levels, and m is a positive integer. When the server determines the target frequency of the processor core in the frequency adjustment domain based on the updated bottleneck count parameter and the load average, the method may be specifically: The server obtains a frequency corresponding to a highest level and a frequency corresponding to a lowest level in m levels. The server determines, based on the load average and the frequency corresponding to the highest level, a frequency indicated by the load average. Then, the server adjusts, based on a difference between the frequency corresponding to the highest level and the frequency corresponding to the lowest level, the total quantity of levels, and the updated bottleneck count parameter, the frequency indicated by the load average, to obtain the target frequency. In the foregoing technical solution, the server determines the target frequency based on the frequency corresponding to the highest level, the frequency corresponding to the lowest level, the load average in the frequency adjustment domain, the bottleneck count parameter, and the total quantity of levels. The determined target frequency matches the actual load value of the processor core. This helps improve the energy efficiency ratio of the server.

In a possible implementation, a total quantity of levels of the frequency of the processor core in the frequency adjustment domain is m, a frequency corresponding to a higher level is higher than a frequency corresponding to a lower level in any two levels, and m is the positive integer. When the server adjusts the frequency of the processor core in the frequency adjustment domain based on the target frequency, the method may be specifically: The server selects a target level from the m levels based on the target frequency. The target frequency is between frequencies respectively corresponding to two adjacent levels in the m levels, and the target level is a higher level in the two adjacent levels. The server adjusts the frequency of the processor core in the frequency adjustment domain to a frequency corresponding to the target level. In the foregoing technical solution, the server selects a frequency of a high level as the target frequency in the frequency adjustment domain. This helps ensure performance of the processor core in the frequency adjustment domain, that is, ensure performance of the server.

In a possible implementation, before obtaining the load average in the frequency adjustment domain, the server further performs the following for each processor core in the frequency adjustment domain: obtaining an estimated load value of the processor core based on a load estimation algorithm and a historical estimated load value of the processor core. The server inputs the estimated load value into an error function, to obtain an error corresponding to the estimated load value, and then corrects the estimated load value based on the error, to obtain a corrected estimated load value. In the foregoing technical solution, the server may correct, according to the error function, the estimated load value estimated by using the load estimation algorithm, to obtain the corrected estimated load value. Compared with the estimated load value obtained by directly using the load estimation algorithm, the obtained corrected estimated load value is closer to the actual load value of the processor core. The target frequency determined by the server based on the corrected estimated load value better matches the actual load value of the processor core. This helps the server adjust the frequency of the processor core to be in a status that matches the actual load value of the processor core, that is, improve the energy efficiency ratio of the server.

In a possible implementation, before inputting the estimated load value into the error function to obtain the error corresponding to the estimated load value, the server may further obtain the error function in advance. When the server obtains the error function, the method may be specifically: The server adjusts the processor core to be in the actual load value when running the task, the server obtains the estimated load value of the processor core based on the load estimation algorithm, then, the server determines, based on the actual load value of the processor core and the estimated load value of the processor core, an error corresponding to the actual load value of the processor core, and the server generates the error function based on errors respectively corresponding to a plurality of actual load values of the processor core. In the foregoing technical solution, the server determines the error function in a process of actually running the task. This helps improve accuracy of the error function in an error correction process.

In a possible implementation, before obtaining the PMU status, the server further determines the threshold corresponding to the PMU event. When the server determines the threshold corresponding to the PMU event, the method may be specifically: After the server adjusts the processor core to be in a maximum actual load value of the processor core when running the task, the server gradually increases the frequency of the processor core until the computing performance of the server reaches the performance bottleneck of the server, and the server uses the running value of the PMU event reported in the frequency adjustment domain when the computing performance of the server reaches the performance bottleneck as the threshold corresponding to the PMU event. In the foregoing technical solution, the server determines the threshold corresponding to the PMU event in the process of actually running the task, and this helps the server accurately identify whether the computing performance of the server reaches the performance bottleneck.

According to a second aspect, this application provides a frequency adjustment apparatus, where the apparatus is included in a server, and the apparatus includes: an obtaining module, configured to obtain a load average and a PMU status in a frequency adjustment domain; and a frequency adjustment module, configured to adjust a frequency of a processor core in the frequency adjustment domain based on the load average and the PMU status. The load average indicates an average of load values of all processor cores in the frequency adjustment domain when different processor cores execute tasks, and the PMU status indicates whether a running value of a PMU event reported by the processor core in the frequency adjustment domain reaches a threshold corresponding to the PMU event.

In a possible implementation, when adjusting the frequency of the processor core based on the load average and the PMU status, the frequency adjustment module is specifically configured to: update a bottleneck count parameter based on the PMU status; determine a target frequency of the processor core in the frequency adjustment domain based on an updated bottleneck count parameter and the load average; and adjust the frequency of the processor core in the frequency adjustment domain based on the target frequency.

In a possible implementation, when updating the bottleneck count parameter based on the PMU status, the frequency adjustment module is specifically configured to: increase the bottleneck count parameter when the PMU status indicates that the running value of the PMU event reported by the processor core in the frequency adjustment domain reaches the threshold corresponding to the PMU event; and/or decrease the bottleneck count parameter when the PMU status indicates that the running value of the PMU event reported by the processor core in the frequency adjustment domain does not reach the threshold corresponding to the PMU event. The target frequency of the processor core in the frequency adjustment domain decreases as the bottleneck count parameter increases, and the target frequency of the processor core in the frequency adjustment domain increases as the bottleneck count parameter decreases.

In a possible implementation, a total quantity of levels of the frequency of the processor core in the frequency adjustment domain is m, a frequency corresponding to a higher level is higher than a frequency corresponding to a lower level in any two levels, and m is a positive integer; and when determining the target frequency of the processor core in the frequency adjustment domain based on the updated bottleneck count parameter and the load average, the frequency adjustment module is specifically configured to: obtain a frequency corresponding to a highest level and a frequency corresponding to a lowest level in m levels; determine, based on the load average and the frequency corresponding to the highest level, a frequency indicated by the load average; and adjust, based on a difference between the frequency corresponding to the highest level and the frequency corresponding to the lowest level, the total quantity of levels, and the updated bottleneck count parameter, the frequency indicated by the load average, to obtain the target frequency.

In a possible implementation, a total quantity of levels of the frequency of the processor core in the frequency adjustment domain is m, a frequency corresponding to a higher level is higher than a frequency corresponding to a lower level in any two levels, and m is the positive integer; and when adjusting the frequency of the processor core in the frequency adjustment domain based on the target frequency, the frequency adjustment module is specifically configured to: select a target level from the m levels based on the target frequency, where the target frequency is between frequencies respectively corresponding to two adjacent levels in the m levels, and the target level is a higher level in the two adjacent levels; and adjust the frequency of the processor core in the frequency adjustment domain to a frequency corresponding to the target level.

In a possible implementation, before obtaining the load average in the frequency adjustment domain, the obtaining module is further configured to: for each processor core in the frequency adjustment domain, obtain an estimated load value of the processor core based on a load estimation algorithm and a historical estimated load value of the processor core; input the estimated load value into an error function, to obtain an error corresponding to the estimated load value; and correct the estimated load value based on the error.

In a possible implementation, before inputting the estimated load value into the error function to obtain the error corresponding to the estimated load value, the obtaining module is further configured to: adjust the processor core to be in an actual load value; obtain the estimated load value of the processor core based on the load estimation algorithm; determine, based on the actual load value of the processor core and the estimated load value of the processor core, an error corresponding to the actual load value of the processor core; and generate the error function based on errors respectively corresponding to a plurality of actual load values of the processor core.

In a possible implementation, before obtaining the PMU status, the obtaining module is further configured to: adjust the processor core to be in a maximum actual load value of the processor core; gradually increase the frequency of the processor core until computing performance of the server reaches a performance bottleneck of the server; and use the running value of the PMU event reported in the frequency adjustment domain when the computing performance of the server reaches the performance bottleneck as the threshold corresponding to the PMU event.

According to a third aspect, an embodiment of this application provides a processor, where the processor includes a logic circuit and a power supply circuit, the power supply circuit is configured to supply power to the logic circuit, and the logic circuit is configured to perform the method in any one of the first aspect or the possible implementations of the first aspect.

According to a fourth aspect, an embodiment of this application provides a chip, where the computer chip includes a processor and a cache, and the processor is configured to perform the method in any one of the first aspect or the possible implementations of the first aspect.

According to a fifth aspect, an embodiment of this application provides a computer device, where the computer device includes a processor, a cache, and a storage, the storage is configured to store computer program code, and the processor is configured to perform the method in any one of the first aspect or the possible implementations of the first aspect.

According to a sixth aspect, an embodiment of this application provides a computationally readable storage medium. The computer-readable storage medium includes instructions. When the instructions are run on a computer, the computer is enabled to perform the method in any one of the first aspect or the possible implementations of the first aspect.

According to a seventh aspect, an embodiment of this application provides a computer program product. When a computer reads and executes the computer program product, the computer is enabled to perform the method in any one of the first aspect or the possible implementations of the first aspect.

For technical effects that can be achieved in any one of the second aspect to the seventh aspect, refer to descriptions of beneficial effects in the first aspect. Details are not described herein again.

BRIEF DESCRIPTION OF DRAWINGS

FIG. 1 is a diagram of a structure of a server;
FIG. 2 is a diagram of a structure of another server;
FIG. 3A and FIG. 3B are a schematic flowchart of a frequency adjustment method according to this application;
FIG. 4 is an error tracking diagram of a load estimation algorithm according to this application;
FIG. 5 is an error tracking diagram of another load estimation algorithm according to this application;
FIG. 6 is a tracking diagram of a quantity of times of PMU events according to this application; and
FIG. 7 is a diagram of a structure of a frequency adjustment apparatus according to this application.

DESCRIPTION OF EMBODIMENTS

To better explain this application, the following first explains related technical terms in this application.

**Super computing cluster (super computing cluster, SCC):** Based on an elastic bare metal server, high-speed remote direct memory access (remote direct memory access, RDMA) interconnection is added for support, to greatly improve network performance, and improve an acceleration ratio of a large-scale cluster. Therefore, the SCC provides a high-quality network with a high bandwidth and a low latency, and has all advantages of the elastic bare metal server. The SCC is mainly used in scenarios such as high-performance computing and artificial intelligence (artificial intelligence, AI), machine learning, scientific computing, engineering computing, data analysis, and audio and video processing.

**Virtual file system (sysfs):** A function is to combine, into a plurality of hierarchical files, devices, buses, and drivers registered with the virtual file system, intuitively display, in a form of files, a hierarchy of the drivers and devices in user space (user space), and export file attributes to the user space. In this way, the user space can modify an attribute value of the device by modifying the file attribute of the virtual file system, to change a working status of the device.

**Operating system (operating system, OS):** The operating system is a software platform, the OS can create an environment, and a computer device may run different application programs in the environment. The OS can function as a bridge between a software program and a system hardware component, and the OS is used by different devices such as a mobile device, a tag, a desktop computer, a server, and a video game console. The OS is system software for managing software and hardware resources of a computer. A kernel (kernel) is a most basic part of the OS, and the kernel is configured to manage system resources. For example, the kernel is configured to provide abstraction (for example, operation and permission control on objects such as a process, a file system, and a memory) on a software layer, and is configured to provide abstraction on access to hardware (for example, a disk or a display). It may be understood that the OS is an extension based on the kernel, and the OS further includes a system component configured to provide a basic service.

**Dynamic voltage and frequency scaling (dynamic voltage and frequency scaling, DVFS) technology:** The dynamic voltage and frequency scaling technology is used by a server to adjust a frequency of a processor (for example, a central processing unit (central processing unit, CPU)) core based on a characteristic of a constant change of a workload. Specifically, when determining that the workload of the processor core increases, the server may increase the frequency of the processor core; and when determining that the workload of the processor core decreases, the server may decrease the frequency of the processor core.

**Processor load value:** The processor load value is statistics about a sum of quantities of processes or process groups being processed by a processor and to be processed by the processor in a period of time. That is, statistics about a length of a queue used by the processor.

**Per-entity load tracking (per-entity load tracking, PELT) algorithm:** The per-entity load tracking algorithm is a load tracking algorithm used for calculating load generated by a process on a server during process scheduling. A requirement of the process on a processor includes two aspects: a task utility (task utility) and task load (task load). Tracking the task utility is mainly to find a processor with proper computing power for a task. Tracking the task load is mainly used for a load balancing algorithm. In other words, each processor in the server bears load that matches a computing power of the processor.

**Computing-intensive (compute-bound):** Execution time of a computing process depends mainly on duration in which computing is performed on a processor for a computing-intensive task. A computing-intensive task refers to an application with a large amount of computing resource consumption and a large computing amount, and mainly focus on a computing speed.

**Memory access-intensive (memory-bound):** Execution time of a computing process depends mainly on access duration of a memory access-intensive task. A memory access-intensive task is usually a task that has low computing resource usage and spends most of time waiting for an input/output (input/output, I/O) operation, for example, an internet task.

**Throughput (throughput):** The throughput refers to a quantity of requests processed by a server per unit time. For example, if a single request consumes more computing resources in a processor, and speeds of an external system interface and an I/O are lower, a throughput is lower; or if a single request consumes fewer computing resources in a processor, and speeds of an external system interface and an I/O are higher, a throughput is higher. For example, the throughput may be measured by parameters such as transactions per second (transactions per second, TPS), a quantity of concurrent transactions, and response time. The TPS is a total quantity of transactions that can be processed by the server per second, the quantity of concurrent transactions is a total quantity of transactions that can be simultaneously processed by the server, and the response time is time for the server to respond to a request.

To provide an effective frequency adjustment method for a processor core, this application provides a frequency adjustment method. In the frequency adjustment method, a server adjusts, based on a load value of each processor core in the frequency adjustment domain when the processor core runs a task, a frequency of the processor core in the frequency adjustment domain with reference to a running value of a PMU event reported by the processor core in the frequency adjustment domain, to adjust the frequency of the processor core to be in a status that matches an actual load value of the processor core. This helps improve an energy efficiency ratio of the server.

The following describes in detail a frequency adjustment method for a processor core provided in this application with reference to accompanying drawings.

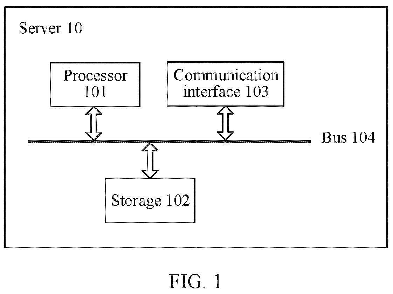

FIG. 1 is a diagram of a hardware structure of a server. Refer to FIG. 1. A server 10 includes a processor 101, a storage 102, and a communication interface 103. Any two of the processor 101, the storage 102, and the communication interface 103 may be connected through a bus 104.

The processor 101 may be a central processing unit (central processing unit, CPU), and the CPU may be configured to execute a software program in the storage 102 to implement one or more functions.

Besides the CPU, the processor 101 may be an application-specific integrated circuit (application-specific integrated circuit, ASIC), a field programmable gate array (field programmable gate array, FPGA), a system on chip (system on chip, SoC), a complex programmable logic device (complex programmable logic device, CPLD), a graphics processing unit (graphics processing unit, GPU), a neural network accelerator (neural network processing unit, NPU), a data processing unit (data processing unit, DPU), or the like.

It should be noted that, in actual application, there may be a plurality of processors 101, and the plurality of processors 101 may include a plurality of processors of a same type, or may include a plurality of processors of different types. For example, the plurality of processors 101 are a plurality of CPUs. For another example, the plurality of processors 101 include one or more CPUs and one or more GPUs. For another example, the plurality of processors 101 include one or more CPUs and one or more NPUs. The processor 101 (for example, the CPU or the NPU) may include one or more processor cores.

The storage 102 is an apparatus for storing data, and may be a memory or a hard disk.

The memory is an internal storage that directly exchanges data with the processor 101. The memory can read and write data at a high speed at any time, and the memory serves as a temporary data storage of an operating system running in the processor 101 or another running program. The memory includes a volatile memory (volatile memory), for example, a random memory access (random memory access, RAM) or a dynamic random memory access (dynamic random memory access, DRAM), may include a non-volatile memory (non-volatile memory), for example, a storage class memory (storage class memory, SCM), or may include a combination of a volatile memory and a non-volatile memory, or the like. In actual application, a plurality of memories may be disposed in the server 10. Optionally, the plurality of memories may be of different types. A quantity of memories and a type of the memory are not limited in this embodiment. In addition, the memory may be configured to have a power protection function. The power protection function means that data stored in the memory is not lost even when a system is powered off and then powered on again. The memory having the power protection function is referred to as a non-volatile memory.

The hard disk is used for providing storage resources. The hard disk includes but is not limited to a non-volatile memory (non-volatile memory), for example, a read-only memory (read-only memory, ROM), a hard disk drive (hard disk drive, HDD), or a solid-state drive (solid-state drive, SSD). Different from the memory, the hard disk has a slow read/write speed and is usually used for storing data persistently. In an implementation, data, program instructions, and the like in the hard disk need to be first loaded into the memory, and then the processor obtains the data and/or the program instructions from the memory.

The communication interface 103 is configured to communicate with another device.

In a possible manner, a symmetric multiprocessing (symmetric multiprocessing, SMP) architecture is used for the server 10. To be specific, a plurality of processors 101 are converged in one server, and the processors 101 share the storage 102 and the bus 104. In the SMP architecture, the server 10 evenly distributes task queues on the plurality of processors 101, so that a data processing capability of the entire server 10 is greatly improved. All processors 101 may equally access the memory, perform an input/output (input/output, I/O), perform external interrupt, and the like.

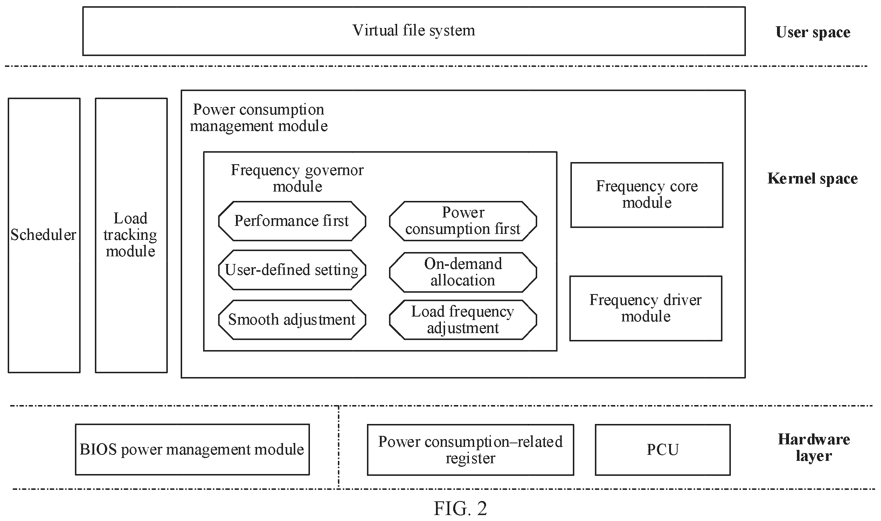

FIG. 2 is a diagram of a structure of another server. It may be understood that FIG. 2 specifically shows a software structure that is provided based on the hardware structure shown in FIG. 1 and that can implement a function of adjusting a frequency of a processor core. Refer to FIG. 2. The server includes user space (user space), kernel space (kernel space), and a hardware layer. Software code respectively corresponding to the user space, the kernel space, and the hardware layer may be stored in the storage 102. Correspondingly, when reading and executing the software code respectively corresponding to the user space, the kernel space, and the hardware layer from the storage 102, the processor 101 has functions of the user space, the kernel space, and the hardware layer.

The kernel space includes a scheduler, a load tracking module, and a power consumption management module. The scheduler is configured to divide a task being executed in the server into a plurality of threads, and then schedule the plurality of threads to a plurality of processor cores evenly based on a load balancing mechanism. The load tracking module is configured to track load of the server/processor core. The power consumption management module is configured to provide, in a form of a virtual file system, an interface for querying for the frequency of the processor core, controlling the frequency of the processor core, and the like for the user space upward, and the power consumption management module is further configured to interact with the hardware layer downward.

Further, the power consumption management module includes a frequency governor module (frequency governor), a frequency core module (frequency core), and a frequency driver module (frequency driver).

The frequency governor module is adapted to configure a frequency adjustment policy. For example, the frequency adjustment policy includes performance first, power consumption first, user-defined setting, on-demand allocation, smooth adjustment, load frequency adjustment, and the like. These frequency adjustment policies are applicable to different application scenarios.

The frequency governor module is further configured to select, in a process in which the server runs the task, a frequency adjustment policy for each frequency adjustment domain by using a frequency adjustment domain as a granularity. The frequency governor module is further configured to: obtain an estimated load value of a previous scheduling periodicity from the load tracking module, and determine an estimated load value of a next scheduling periodicity with reference to the frequency adjustment policy corresponding to the frequency adjustment domain, to determine a target frequency for the frequency adjustment domain; and send the determined target frequency to the frequency core module.

Based on a hardware design, the server 10 may allocate a plurality of processor cores in the server 10 to one or more frequency adjustment domains, where each frequency adjustment domain includes one or more processor cores, and each processor core is allocated to one frequency adjustment domain. Further, processor cores in a same frequency adjustment domain need to use a same frequency adjustment policy, and processor cores in different frequency adjustment domains may use a same frequency adjustment policy or different frequency adjustment policies.

For example, the server 10 includes a processor core 1 to a processor core 64, where the processor core 1 to a processor core 16 are allocated to a frequency adjustment domain 1, a processor core 17 to a processor core 32 are allocated to a frequency adjustment domain 2, a processor core 33 to a processor core 48 are allocated to a frequency adjustment domain 3, and a processor core 49 to the processor core 64 are allocated to a frequency adjustment domain 4. The frequency governor module may determine a frequency adjustment policy for each in the frequency adjustment domain 1 to the frequency adjustment domain 4 according to a requirement of a user for a processor core in the frequency adjustment domain to run a task. For example, if the user sets a processor core in the frequency adjustment domain 1 to the frequency adjustment domain 3 to run a task mainly based on performance, the frequency governor module may set a frequency adjustment policy in the frequency adjustment domain 1 to the frequency adjustment domain 3 as performance first; and if the user sets a processor core in the frequency adjustment domain 4 to perform frequency adjustment based on a load value of the processor core when the processor core runs a task, the frequency governor module may set a frequency adjustment policy in the frequency adjustment domain 4 as load frequency adjustment.

Further, when the frequency adjustment domain includes the plurality of processor cores, the plurality of processor cores may be located in a same processor, or may be located in a plurality of different processors. Still with reference to the foregoing example, the server 10 includes a processor 1 to a processor 3, the processor core 1 to a processor core 8 in the frequency adjustment domain 1 are located in the processor 1, a processor core 9 to the processor core 16 are located in the processor 2, and the processor core 17 to the processor core 32 in the frequency adjustment domain 2 are all located in the processor 3.

In addition, because the processor cores in the same frequency adjustment domain need to use the same frequency adjustment policy, target frequencies of the processor cores in the same frequency adjustment domain are the same. When the same frequency adjustment policy is used for the different frequency adjustment domains, target frequencies of processor cores in the different frequency adjustment domains may be the same. When the different frequency adjustment policies are used for the different frequency adjustment domains, that is, when two processor cores in different frequency adjustment domains use different frequency adjustment policies, target frequencies used for the two processor cores in the different frequency adjustment domains may be different.

The frequency driver module is configured to read the target frequency of the processor core from the frequency core module. Further, the frequency driver module is integrated with a driver for interacting with the hardware layer, and the frequency driver module can interact with the hardware layer, to adjust the frequency of the processor core based on the target frequency. For example, the frequency driver module is integrated with a drive for interacting with a power consumption-related register and/or a drive for interacting with a power consumption control unit (power control unit, PCU).

The hardware layer includes the power consumption-related register, the PCU, and a basic input/output system (basic input/output system, BIOS) power management (power management) module. The BIOS power management module provides a power management option for the power consumption management module, and may authorize the power consumption management module to control the frequency, a voltage, and the like of the processor core, and forbid the power consumption management module to control the frequency, the voltage, and the like of the processor core.

With reference to the diagrams of the structures of the servers shown in FIG. 1 and FIG. 2, FIG. 3A and FIG. 3B further show a schematic flowchart of a frequency adjustment method according to this application. For example, the frequency adjustment method may be specifically performed by the processor 101 in FIG. 1, or may be specifically performed by the power consumption management module in FIG. 2. The frequency adjustment method is specifically that a server performs frequency adjustment on N processor cores in a frequency adjustment domain, where N is an integer greater than or equal to 1. For example, the N processor cores are processor cores of a same type, for example, all are CPU cores. For example, an operating system implemented based on a linux kernel is installed in the server. In other words, the frequency adjustment method is implemented in the operating system that is based on the linux kernel.

It should be noted in advance that the frequency adjustment method in this application includes an error function generation procedure, a PMU event threshold generation procedure, and an actual frequency adjustment procedure. Both the error function generation procedure and the PMU event threshold generation procedure are before the actual frequency adjustment procedure, and a sequence of the error function generation procedure and the PMU event threshold generation procedure is not limited.

Further, in the error function generation procedure, the server may generate an error function. For details, refer to the following descriptions in step 301 to step 304. In the PMU event threshold generation procedure, the server may generate a threshold corresponding to a PMU event. For details, refer to the following descriptions in step 305 to step 307. In the actual frequency adjustment procedure, the server may determine, based on the error function and the threshold corresponding to the PMU event, an accurate target frequency corresponding to the frequency adjustment domain. For details, refer to the following descriptions in step 308 to step 315. Certainly, in this application, the error function generation procedure and the PMU event threshold generation procedure are optional procedures. Alternatively, a preset error function and/or PMU event threshold may be directly input into the actual frequency adjustment procedure, and the server performs the actual frequency adjustment procedure.

Step 301: The server starts a first task.

Optionally, the first task may be a benchmark test task that is based on adjustable load.

The first task may be a computing-intensive task, or may be a memory access-intensive task. When the first task is the computing-intensive task, the server can obtain the error function more accurately.

Step 302: The server adjusts, for K times, a computing amount requested by the first task per unit time, to obtain K actual load values respectively corresponding to the K times of adjustment of a processor core, where K is a positive integer. It may be understood that each time the server adjusts the computing amount requested by the first task per unit time, an actual load value of the processor core changes once.

Optionally, in K adjustment processes, the computing amount requested by the first task per unit time gradually decreases, and correspondingly, the actual load value of the processor core gradually decreases. Optionally, a difference between two adjacent actual load values in a plurality of different actual load values is a preset value. For example, K=8, and the eight actual load values of the processor core are respectively 80%, 70%, ..., 20%, and 10%. Optionally, in K adjustment processes, the computing amount requested by the first task per unit time gradually increases, and correspondingly, the actual load value of the processor core gradually increases. Optionally, a difference between two adjacent actual load values in a plurality of different actual load values is a preset value. For example, K=8, and the eight actual load values of the processor core are respectively 10%, 20%, ..., 70%, and 80%.

Step 303: The server determines, based on the K actual load values and K estimated load values corresponding to the K actual load values, errors respectively corresponding to the K actual load values.

In a specific implementation, each time after adjusting the computing amount requested by the first task per unit time, the server may determine an estimated load value of the processor core according to a load estimation algorithm, and then determine, based on an actual load value and an estimated load value of the processor core, an error that corresponds to the actual load value and that is in the load estimation algorithm.

For example, the load estimation algorithm is a PELT algorithm. When the server determines the estimated load value of the processor core according to the PELT algorithm, the method may be specifically: The server obtains estimated load values of the processor core in a plurality of historical scheduling periodicities, and determines an estimated load value of a current scheduling periodicity based on the estimated load values of the plurality of historical scheduling periodicities and an instantaneous load value of the current scheduling periodicity. For example, the server determines the estimated load value of the current scheduling periodicity according to a relational expression $L=L_0+L_1\times y+L_2\times y^2+L_3\times y^3+...+L_i\times y^i$, where L is the estimated load value of the current scheduling periodicity, and $L_0$ is the instantaneous load value of the current scheduling periodicity; $L_1$ is an estimated load value of a 1st scheduling periodicity before the current scheduling periodicity, and $L_2$ is an estimated load value of a 2nd scheduling periodicity

before the current scheduling periodicity; $L_i$ is an estimated load value of an ith scheduling periodicity before the current scheduling periodicity, i is a quantity of historical scheduling periodicities, and i is, for example, 32; and y is an attenuation factor, and y is less than 1.

With reference to the foregoing example, the server may determine corresponding estimated load values when actual load values of the processor core are respectively 80%, 70%, ..., 20%, and 10%, for example, respectively 81%, 78%, ..., 28%, and 18%. Then, the server determines corresponding errors in the load estimation algorithm when the processor core is in different actual load values. Specifically, the server determines that a corresponding error in the load estimation algorithm is 1% when the actual load value of the processor core is 80%, the server determines that a corresponding error in the load estimation algorithm is 11% when the actual load value of the processor core is 70%, ..., the server determines that a corresponding error in the load estimation algorithm is 40% when the actual load value of the processor core is 20%, and the server determines that a corresponding error in the load estimation algorithm is 80% when the actual load value of the processor core is 10%.

Step 304: The server obtains the error function through fitting based on the K actual load values and the errors respectively corresponding to the K actual load values.

For example, the server may obtain the error function through fitting based on the errors respectively corresponding to the plurality of different actual load values in the load estimation algorithm. For example, the error function may be represented as Error=g(load_estimated), where load_estimated is an estimated load value determined based on the load estimation algorithm, and Error is an error corresponding to the estimated load value.

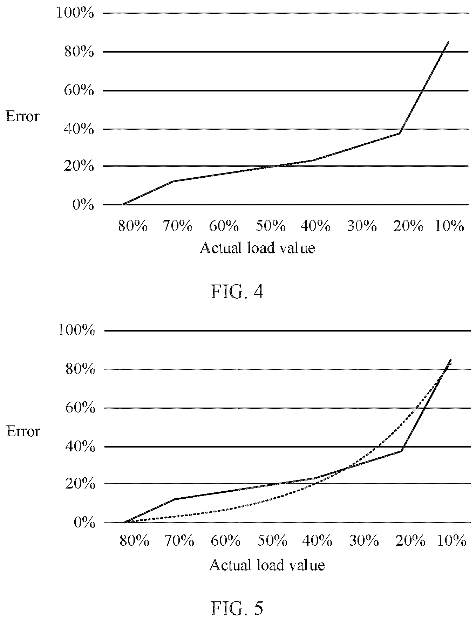

FIG. 4 is an error tracking diagram of a load estimation algorithm according to an example of this application. A horizontal coordinate represents an actual load value of a processor core, a vertical coordinate represents an error in the load estimation algorithm, and a solid line represents errors corresponding to a plurality of different actual load values in the load estimation algorithm. For example, a corresponding error in the load estimation algorithm when the actual load value is 80% is 1%, and a corresponding error in the load estimation algorithm when the actual load value is 70% is 11%. For an error function obtained by the server through fitting according to the solid line shown in FIG. 4, refer to a dashed line shown in FIG. 5.

It should be added that, in this application, an actual load value of the processor core may be specifically a ratio of a sum of quantities of processes currently processed and to be processed by the processor core to a maximum quantity of processes that can be processed by the processor core. Herein, the actual load value may also be referred to as an actual load ratio. Certainly, in another possible manner, the server may further adjust the first task to gradually decrease or increase an actual load quantity (the sum of the quantities of currently processed processes and to-be-processed processes) of the processor core, and collect statistics on errors of the processor core in different actual load quantities. An implementation is similar to that of the actual load value.

It should be further added that, in the foregoing process of determining the error function, the error function may not be determined by the server, but may be determined by another device. For example, the device obtains, from the server, the errors respectively corresponding to the plurality of different actual load values in the load estimation algorithm, to determine an error function, and then inputs the error function into the server.

Step 305: The server starts a second task. The second task includes a plurality of threads.

The second task may be specifically a memory access-intensive task. This helps computing performance of the server reach a performance bottleneck more quickly. For details about the computing performance of the server reaching the performance bottleneck, refer to the following descriptions in step 306.

Step 306: The server adjusts a computing amount requested by the second task per unit time, so that the actual load value of the processor core reaches a maximum value (for example, the actual load value reaches 100%). Then, the server gradually increases a frequency of the processor core until the computing performance of the server reaches the performance bottleneck.

Optionally, the server may increase the frequency of the processor core based on a preset step. In other words, a difference between the frequency of the processor core before frequency adjustment and a frequency of the processor core after the frequency adjustment is equal to the preset step. The preset step is, for example, 100 MHz.

In a possible manner, that the server reaches the performance bottleneck may include: An increase from a throughput corresponding to the second task that the server runs before the frequency adjustment to a throughput corresponding to the second task that the server runs after the frequency adjustment is less than (or less than or equal to) a first preset value, and/or a decrease from corresponding duration in which the server runs the second task for completion before the frequency adjustment to corresponding duration in which the server runs the second task for completion after the frequency adjustment is less than (or less than or equal to) a second preset value.

In a first possible example, that the server reaches the performance bottleneck is specifically that the increase from the throughput corresponding to the second task that the server runs before the frequency adjustment to the throughput corresponding to the second task that the server runs after the frequency adjustment is less than the first preset value.

For example, the server adjusts the actual load value of the processor core to 100%, the server sets the frequency of the processor core to gradually increase based on the preset step, and determines a throughput of the second task that is run by the server at each frequency of the processor core. When the server determines that as the frequency of the processor core continuously increases, a throughput increase when the server runs the second task is less than the first preset value, it is determined that the server reaches the performance bottleneck.

For example, the preset step is 100 MHz, and the first preset value may be 0.05 Mtps. When the frequency of the processor core is 1200 MHz, the throughput of the server is 1.2 Mtps; and when the frequency of the processor core is 1300 MHz, the throughput of the server is 1.3 Mtps. A throughput increase is 0.1 Mtps. In this case, the computing performance of the server has not reached the performance bottleneck. When the frequency of the processor core is 2000 MHz, the throughput of the server is 1.45 Mtps; and when the frequency of the processor core is 2100 MHz, the throughput of the server is 1.46 Mtps. A throughput increase is 0.01 Mtps. In this case, the computing performance of the server reaches the performance bottleneck.

For example, the frequency of the processor core has m levels (denoted as a level 1 to a level m), where m is an integer greater than 1, and the frequency of the processor core increases as a lower level is adjusted to a higher level. When the server sets the frequency of the processor core to gradually increase, the method may be specifically: The server adjusts the frequency of the processor core from a frequency corresponding to the level 1 to a frequency corresponding to the level m step by step. Further, the server determines a throughput generated when the server runs the second task when the frequency of the processor core is at each of the level 1 to the level m, so that the server determines whether the computing performance of the server reaches the performance bottleneck.

In a second possible example, that the server reaches the performance bottleneck may alternatively be that the decrease from the corresponding duration in which the server runs the second task for completion before the frequency adjustment to the corresponding duration in which the server runs the second task for completion after the frequency adjustment is less than the second preset value. In a third possible example, the increase from the throughput corresponding to the second task that the server runs before the frequency adjustment to the throughput corresponding to the second task that the server runs after the frequency adjustment is less than the first preset value, and the decrease from the corresponding duration in which the server runs the second task for completion before the frequency adjustment to the corresponding duration in which the server runs the second task for completion after the frequency adjustment is less than the second preset value. For specific implementations of the second possible example and the third possible example, refer to descriptions in the first possible example.

In addition, in another possible manner, that the server reaches the performance bottleneck may include: A ratio of, to the throughput of the server before the frequency adjustment, the increase from the throughput corresponding to the second task that the server runs before the frequency adjustment to the throughput corresponding to the second task that the server runs after the frequency adjustment is less than (or less than or equal to) a preset value 1, and/or a ratio of, to the corresponding duration in which the second task is run for completion before the frequency adjustment, the decrease from the corresponding duration in which the server runs the second task for completion before the frequency adjustment to the corresponding duration in which the server runs the second task for completion after the frequency adjustment is less than (or less than or equal to) a preset value 2. For this specific implementation, refer to the descriptions in the foregoing possible manners.

Step 307: The server determines a running value of a PMU event reported by the processor core when the computing performance of the server reaches the performance bottleneck as a threshold corresponding to the PMU event.

The PMU event may be an average quantity of instructions (represented as retiring) executed in each cycle (cycle), an average quantity of times of cache misses (represented as cache miss) of each instruction, a stall ratio (represented as stall ratio), a backend bound (represented as backend_bound), or the like.

The running value of the PMU event can be determined by a PMU in the server through statistics. With reference to the example in FIG. 1, each processor core of the processor 101 includes a PMU. The PMU includes a computing module and one or more counters corresponding to each PMU event. Using the retiring as an example, the PMU in the processor core includes two counters (denoted as a counter 1 and a counter 2) corresponding to the retiring. The counter 1 is configured to collect statistics on a total quantity of instructions executed by the processor core, and the counter 2 is configured to collect statistics on a total quantity of cycles executed by the processor core. Specifically, each time the processor core executes an instruction, a count value in the counter 1 is incremented by 1; and each time the processor core executes a cycle, a count value in the counter 2 is incremented by 1. Then, the computing module in the PMU may read the count values in the counter 1 and the counter 2, and divide the count value of the counter 1 by the count value of the counter 2, to obtain the retiring.

For example, when determining that the computing performance of the server reaches the performance bottleneck, the server may determine a quantity of times reported by a PMU corresponding to the retiring in the processor core as a threshold corresponding to the retiring, determine a quantity of times reported by a PMU corresponding to the cache miss in the processor core as a threshold corresponding to the cache miss, determine a ratio reported by a PMU corresponding to the stall_ratio in the processor core as a threshold corresponding to the stall_ratio, determine a quantity of times reported by a PMU corresponding to the backend_bound in the processor core as a threshold corresponding to the backend_bound, and the like.

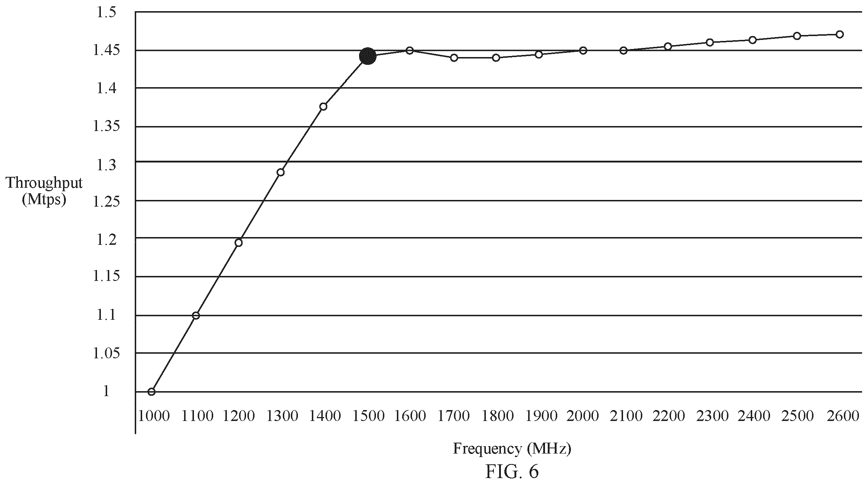

As shown in FIG. 6, this application provides an example of a tracking diagram of a quantity of times of PMU events. A horizontal coordinate represents a frequency of a processor core, a vertical coordinate represents a throughput (which may be specifically a normalized throughput) generated when a server runs a second task, and a circle represents a throughput generated when the server runs the second task at a frequency of the processor core.

For example, when the frequency of the processor core increases from 1000 MHz to 1500 MHz, an increase from the throughput corresponding to the second task that the server runs before the frequency adjustment to the throughput corresponding to the second task that the server runs after the frequency adjustment is greater than the first preset value; and when the frequency of the processor core increases from 1500 MHz to 2600 MHz, an increase from the throughput corresponding to the second task that the server runs before the frequency adjustment to the throughput corresponding to the second task that the server runs after the frequency adjustment is less than the first preset value. It may be understood that when the frequency of the processor core reaches 1500 MHz, the computing performance of the server reaches the performance bottleneck. In this case, the quantity of times of the PMU events is the threshold corresponding to the PMU event, and the server may obtain the threshold corresponding to the PMU event reported by the processor core (specifically, a position of a solid circle in FIG. 6).

Step 308: The server starts a third task.

The third task may be considered as a task that the server actually needs to run. That the server runs the third task may be specifically considered as that a scheduler in the server schedules, based on a load balancing mechanism, a plurality of threads included in the third task to a processor core of each of one or more frequency adjustment domains evenly.

Further, in a process of running the third task, the server may adjust, for any frequency adjustment domain, a frequency of a processor core in the frequency adjustment domain based on the determined error function and the threshold corresponding to the PMU event. For details, refer to the following step 309 to step 315.

Step 309: The server determines respective estimated load values (that is, N estimated load values) of N processor cores in the frequency adjustment domain based on the load estimation algorithm, where N is a positive integer.

For example, the load estimation algorithm is the PELT algorithm. The server performs the following for each processor core in the frequency adjustment domain: obtaining j historical estimated load values of the processor core in j historical scheduling periodicities before an $i^{th}$ scheduling periodicity, and determining an estimated load value of the processor core in the $i^{th}$ scheduling periodicity based on the j historical estimated load values, time when an entity is in a ready state in the $i^{th}$ scheduling periodicity, and the PELT algorithm, where j is a positive integer, and i is greater than or equal to j.

For example, i=10 and j=5. The server obtains, in a $10^{th}$ scheduling periodicity, five historical estimated load values that of the processor core and that respectively correspond to a $4^{th}$ scheduling periodicity to a $9^{th}$ scheduling periodicity, and determines an estimated load value of the processor core in the $10^{th}$ scheduling periodicity based on the five historical estimated load values, time when the entity is in the ready state in the $10^{th}$ scheduling periodicity, and the PELT algorithm.

In addition, the load estimation algorithm may alternatively be another prediction algorithm obtained through training based on an artificial intelligence (artificial intelligence, AI) model. Specifically, the prediction algorithm is used for obtaining, through prediction, the estimated load value of the processor core in the $i^{th}$ scheduling periodicity based on the j historical estimated load values in the j historical scheduling periodicities before the $i^{th}$ scheduling periodicity.

In this application, the server predicts an estimated load value of a current scheduling periodicity based on the load estimation algorithm and a plurality of historical estimated load values. This helps cope with a burst jitter of the load value in the server, and improve real-time performance of the frequency adjustment.

Step 310: The server separately inputs the N estimated load values into the error function, to obtain errors respectively corresponding to the N estimated load values, and corrects the N estimated load values based on the errors respectively corresponding to the N estimated load values, to obtain N corrected estimated load values.

In a possible implementation, the error function is $Error=g(load_{estimated})$, and the server performs the following for each processor core: using an estimated load value of the processor core as a value of $load_{estimated}$, and inputting the value of $load_{estimated}$ into the error function $Error=g(load_{estimated})$, where the server calculates the Error corresponding to the estimated load value in the obtained load estimation algorithm. Subsequently, the server determines that a corrected estimated load value is denoted as $load_{estimated} \times \dfrac{1}{1+Error}$ , that is, denoted as $load_{estimated} \times \dfrac{1}{1+g(load_{estimated})}$ .

Step 311: The server uses an average of the N corrected estimated load values as a load average in the frequency adjustment domain.

For example, N=16. In other words, the frequency adjustment domain includes 16 processor cores. Corrected estimated load values of the 16 processor cores are respectively represented as an estimated load value 1 to an estimated load value 16, and the server determines that a load average in the frequency adjustment domain is equal to an average of the estimated load value 1 to the estimated load value 16.

In this way, this helps avoid a case in which frequency reduction of another processor core is affected when an estimated load value of one processor core (or several processor cores) of the N processor cores is greater than an estimated load value of the another processor core in the frequency adjustment domain.

When the third task is jointly executed by processor cores in a plurality of frequency adjustment domains, the server may further determine the load average in the frequency adjustment domain based on a corrected estimated load value of a processor core in each of the plurality of frequency adjustment domains. It is understood as that when obtaining the third task, the scheduler in the server schedules, based on the load balancing mechanism, the plurality of threads included in the third task to the processor core of each of the plurality of frequency adjustment domains evenly. In this way, a load value of the processor core of each of the plurality of frequency adjustment domains may be approximately balanced. The load average that is in the frequency adjustment domain and that is determined by the server based on the estimated load value of the processor core of each of the plurality of frequency adjustment domains is more accurate.

For example, when the third task is jointly executed by a processor core 1 to a processor core 16 in a frequency adjustment domain 1 and a processor core 17 to a processor core 32 in a frequency adjustment domain 2, the server may obtain estimated load values respectively corresponding to the processor core 1 to the processor core 16 in the frequency adjustment domain 1, and obtain estimated load values respectively corresponding to the processor core 17 to the processor core 32 in the frequency adjustment domain 2. The server averages the estimated load values of the 32 processor cores, and then, an obtained average is used as a load average in the frequency adjustment domain 1 (or the frequency adjustment domain 2).

It should be added that the foregoing server first corrects, according to the error function, the estimated load values respectively corresponding to the N processor cores, and averages the obtained N corrected estimated load values, to obtain the load average in the frequency adjustment domain (that is, correction is performed before averaging). In another possible manner, the server may first average the estimated load values respectively corresponding to the N processor cores, and correct, according to the error function, a value obtained through averaging, to obtain the load average in the frequency adjustment domain (that is, averaging is performed before correcting).

In addition, a case in which there is one processor core in the frequency adjustment domain is not excluded in this application. In this case, the server may directly use a corrected estimated load value of the processor core as an estimated load value (or referred to as a load average) in the frequency adjustment domain.

Step 312: The server determines whether the running value of the PMU event reported by the processor core in the frequency adjustment domain reaches the threshold corresponding to the PMU event, to determine whether the computing performance of the server is in a bottleneck state. In this application, whether the computing performance of the server is in the bottleneck state is equivalent to a PMU status.

In this application, the server may determine, based on whether a running value of a PMU event reported by any processor core in the frequency adjustment domain reaches a threshold corresponding to the PMU event, whether the computing performance of the server is in the bottleneck state. Alternatively, when N is greater than 1, the server may determine, based on whether an average of running values of PMU events reported by the N processor cores in the frequency adjustment domain reaches a threshold corresponding to the PMU events, whether the computing performance of the server is in the bottleneck state.

Further, there may be one or more PMU events.

When there is one PMU event, if determining that a quantity of times or a threshold of the PMU event reaches a threshold corresponding to the PMU event, the server determines that the server reaches the performance bottleneck; or if determining that a quantity of times or a threshold of the PMU event does not reach a threshold corresponding to the PMU event, the server determines that the server does not reach the performance bottleneck.

When there are a plurality of PMU events, if determining that a proportion of PMU events that are in the plurality of PMU events and whose quantities of times or thresholds reach corresponding thresholds respectively exceeds a preset proportion, the server determines that the server reaches the performance bottleneck; or if determining that a proportion of PMU events that are in the plurality of PMU events and whose quantities of times or thresholds reach corresponding thresholds respectively does not exceed a preset proportion, the server determines that the server does not reach the performance bottleneck. The preset proportion is, for example, 30%, 50%, or 90%.

For example, a total of four PMU events: retiring, cache miss, stall_ratio and backend_bound are preset in the server, thresholds respectively corresponding to the retiring, cache miss, stall_ratio and backend_bound are $\beta_1$, $\beta_2$, $\beta_3$, and $\beta_4$, and the preset proportion is 30%. In the current scheduling periodicity, if the server determines that a quantity of times of the retiring or a threshold reaches $\beta_1$, and a quantity of times of the cache miss or a threshold reaches $\beta_2$, but a quantity of times of the stall_ratio or a threshold does not reach $\beta_3$, and a quantity of times of the backend_bound or a threshold does not reach $\beta_4$, the server determines that a proportion of PMU events that are in the four PMU events and whose quantities of times or thresholds reach corresponding thresholds respectively exceeds 30%, to determine that the computing performance of the server reaches the performance bottleneck.

Step 313: The server updates a bottleneck count parameter based on whether the computing performance of the server is in the bottleneck state.

Specifically, if determining that the computing performance of the server is in the bottleneck state, the server increases the bottleneck count parameter; and/or if determining that the computing performance of the server is not in the bottleneck state, the server decreases the bottleneck count parameter.

A target frequency of the processor core decreases as the bottleneck count parameter increases, and the target frequency of the processor core increases as the bottleneck count parameter decreases.

In a possible example, when starting the third task, the server sets the bottleneck count parameter to 0. Further, in each scheduling periodicity, if determining that the computing performance of the server is in the bottleneck state, the server adds a third preset value to the bottleneck count parameter; or if determining that the computing performance of the server is not in the bottleneck state, the server adds a third preset value to the bottleneck count parameter, where the third preset value is a positive integer. For example, the third preset value is equal to 1.

Step 314: The server determines the target frequency of the processor core in the frequency adjustment domain based on an updated bottleneck count parameter and the load average.

In a possible implementation, a total quantity of levels of the frequency of the processor core in the frequency adjustment domain is m, and a frequency corresponding to a higher level is higher than a frequency corresponding to a lower level in any two levels. The server may obtain a frequency corresponding to a highest level and a frequency corresponding to a lowest level in m levels. The server determines, based on the load average in the frequency adjustment domain and the frequency corresponding to the highest level, a frequency indicated by the load average. Then, the server adjusts, based on a difference between the frequency corresponding to the highest level and the frequency corresponding to the lowest level, the total quantity of levels m, and the updated bottleneck count parameter, the frequency indicated by the load average, to obtain the target frequency.

In a possible implementation, the server determines the target frequency in the frequency adjustment domain according to a relational expression $f_{target}=\max\{load \times f_{max} - n \times (f_{max} - f_{min})/m, f_{min}\}$, where $f_{target}$ is the target frequency in the frequency adjustment domain, load is the load average in the frequency adjustment domain, n is the bottleneck count parameter, m is the total quantity of levels of the frequency of the processor core, $f_{max}$ is the frequency corresponding to the highest level of the processor core in the frequency adjustment domain, $f_{max}$ is a fixed value, $f_{min}$ is the frequency corresponding to the lowest level of the processor core in the frequency adjustment domain, $f_{min}$ is a fixed value, and $load \times f_{max}$ is the frequency indicated by the load average, where $0 \leq n < m$.

In this application, the server sets a value of the bottleneck count parameter to gradually increase or decrease in the scheduling periodicity, and this helps the frequency of the processor core gradually decrease or increase in the scheduling periodicity, and helps the processor frequency and a computing amount of the third task approximate a balance.

It should be added that, when the server adjusts the bottleneck count parameter, the method may alternatively be: The server decreases the bottleneck count parameter if determining that the computing performance of the server is in the bottleneck state, and/or increases the bottleneck count parameter if determining that the computing performance of the server is not in the bottleneck state. The target frequency of the processor core decreases as the bottleneck count parameter decreases, and the target frequency of the processor core increases as the bottleneck count parameter increases. In this way, the server sets the value of the bottleneck count parameter to gradually increase or decrease in the scheduling periodicity, and this helps the frequency of the processor core gradually increase or decrease in the scheduling periodicity, and helps the processor frequency and the computing amount of the third task approximate a balance.

Step 315: The server performs frequency adjustment on the processor core in the frequency adjustment domain based on the target frequency.

In a possible implementation, when the frequency adjustment domain includes one processor core (that is, N=1), the server performs frequency adjustment on the processor core in the frequency adjustment domain based on the target frequency; or when the frequency adjustment domain includes a plurality of processor cores (that is, N is greater than 1), the server separately performs frequency adjustment on the plurality of processor cores in the frequency adjustment domain based on the target frequency. Optionally, the server simultaneously performs frequency adjustment on the plurality of processor cores in the frequency adjustment domain. In addition, the foregoing step 309 to step 315 are for a frequency adjustment domain. Therefore, the server mainly performs frequency adjustment on a processor core in the frequency adjustment domain.

In a possible implementation, the frequency of the processor core has m levels. After determining the target frequency, the server may select, from the m levels, a level closest to that of the target frequency as a target level. For example, the frequency of the processor core may have a level 1 to a level 10 (that is, m=10), where frequencies corresponding to the level 1 to the level 10 increase gradually. When the server determines that the target frequency is close to a frequency corresponding to a level 5, the server determines that the target level is the level 5. When the server determines that the target frequency is equal to the frequency corresponding to the level 5, the server determines that the target level is the level 5.

In another possible implementation, the frequency of the processor core has m levels. After determining the target frequency, if the server determines that a frequency corresponding to a level in the m levels is exactly equal to the target frequency, the server uses the level as the target level; or if the server determines that the target frequency is between frequencies corresponding to two adjacent levels, the server selects a level corresponding to a higher frequency in the two adjacent levels as the target level. For example, the frequency of the processor core may have a level 1 to a level 10 (that is, m=10), where frequencies corresponding to the level 1 to the level 10 increase gradually. When the server determines that the target frequency is between frequencies corresponding to the level 5 and a level 6, the server determines that the target level is the level 6. When the server determines that the target frequency is equal to the frequency corresponding to the level 5, the server determines that the target level is the level 5. This helps ensure performance of the processor core in the frequency adjustment domain, that is, ensure performance of the server.

Optionally, after determining the target level, the server may further determine whether a current level of the frequency of the processor core in the frequency adjustment domain is the same as the target level. Specifically, if determining that the current level is the same as the target level, the server does not need to adjust the level of the frequency of the processor core in the frequency adjustment domain; or if determining that the current level is different from the target level, the server adjusts the level of the frequency of the processor core in the frequency adjustment domain to the target level.

It may be understood that step 309 to step 315 are a cyclic process, and the server executes the cyclic process in each scheduling periodicity. An example in which the third preset value is 1 is used for description.

When the third task is started (that is, in a 1st scheduling periodicity), the server sets the bottleneck count parameter to 0, and the server determines a target frequency 1 of the 1st scheduling periodicity based on the bottleneck count parameter "0" and a load average in a frequency adjustment domain of the 1st scheduling periodicity, and performs frequency adjustment on the N processor cores in the frequency adjustment domain based on the target frequency 1.

In a 2nd scheduling periodicity, the server determines that the computing performance of the server reaches the performance bottleneck, and updates a bottleneck count parameter in the 2nd scheduling periodicity to 1, so that the server determines a target frequency 2 of the 2nd scheduling periodicity based on the bottleneck count parameter "1" and a load average in a frequency adjustment domain of the 2nd scheduling periodicity, and performs frequency adjustment on the N processor cores in the frequency adjustment domain based on the target frequency 2.

In a 3rd scheduling periodicity, the server determines that the computing performance of the server reaches the performance bottleneck, and updates a bottleneck count parameter in the 3rd scheduling periodicity to 2, so that the server determines a target frequency 3 of the 3rd scheduling periodicity based on the bottleneck count parameter "2" and a load average in a frequency adjustment domain of the 3rd scheduling periodicity, and performs frequency adjustment on the N processor cores in the frequency adjustment domain based on the target frequency 3.

In a 4th scheduling periodicity, the server determines that the computing performance of the server does not reach the performance bottleneck, and updates a bottleneck count parameter in the 4th scheduling periodicity to 1, so that the server determines a target frequency 4 of the 4th scheduling periodicity based on the bottleneck count parameter "1" and a load average in a frequency adjustment domain of the 4th scheduling periodicity, and performs frequency adjustment on the N processor cores in the frequency adjustment domain based on the target frequency 4.

Operations for other scheduling periodicities are similar, and details are not described again.

In the foregoing technical solution, in a process of running the first task in advance, the server determines the error function based on the plurality of actual load values of the processor core and estimated load values respectively corresponding to the plurality of actual load values. The error function indicates the errors respectively corresponding to the plurality of actual load values in the load estimation algorithm (for example, the PELT algorithm). In this way, when actually running the third task, the server may correct, according to the error function, the estimated load value estimated by using the load estimation algorithm, to obtain the corrected estimated load value. In this way, the obtained corrected estimated load value is closer to the actual load value of the processor core than the estimated load value obtained by directly using the load estimation algorithm. The target frequency determined by the server based on the corrected estimated load value better matches the actual load value of the processor core. This helps adjust the frequency of the processor core to be in a status that matches the actual load value of the processor core. That is, an energy efficiency ratio of the server is improved.

In addition, in a process of running the second task in advance, the server determines the threshold corresponding to the PMU event when the computing performance of the server reaches the performance bottleneck. It may also be understood that when the running value reported by the PMU event reaches the threshold corresponding to the PMU event, it may be determined that the computing performance of the server reaches the performance bottleneck. In this way, when actually running the third task, the server may determine, based on whether the running value reported by the PMU event reaches the threshold corresponding to the PMU event, whether the computing performance of the server reaches the performance bottleneck, and determine, based on whether the computing performance of the server reaches the performance bottleneck, whether to decrease or increase the frequency of the processor core. In this way, a case in which when the computing performance of the server has reached the performance bottleneck, the frequency of the processor core is further increased and unnecessary power consumption waste is caused is avoided. This helps further improve the energy efficiency ratio of the server.

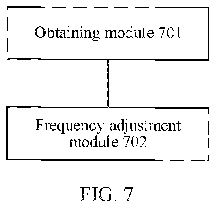

Based on the foregoing content and a same concept, FIG. 7 is a diagram of a structure of a frequency adjustment apparatus according to this application. The frequency adjustment apparatus may be configured to implement a function of the server in the foregoing method embodiments, and therefore can also achieve beneficial effects of the foregoing method embodiments. In this application, the frequency adjustment apparatus may be the server shown in FIG. 1 or FIG. 2.

The apparatus includes: an obtaining module 701, configured to obtain a load average and a PMU status in a frequency adjustment domain; and a frequency adjustment module 702, configured to adjust a frequency of a processor core in the frequency adjustment domain based on the load average and the PMU status. The load average indicates an average of load values of all processor cores in the frequency adjustment domain when different processor cores execute tasks, and the PMU status indicates whether a running value of a PMU event reported by the processor core in the frequency adjustment domain reaches a threshold corresponding to the PMU event.

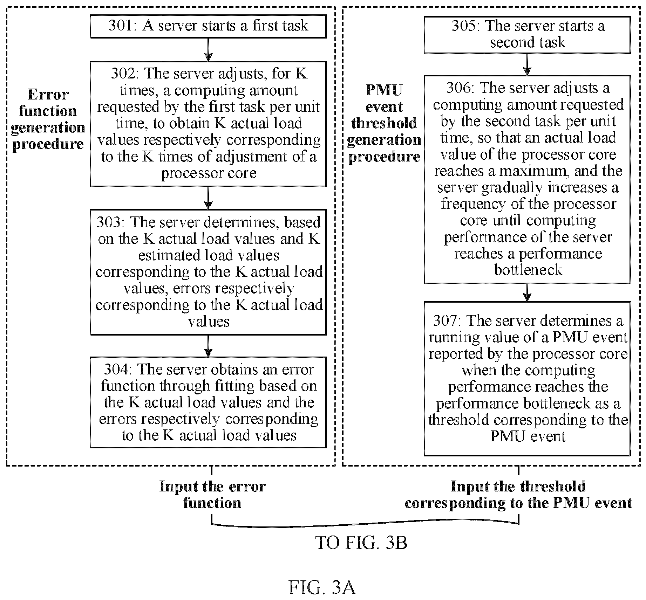

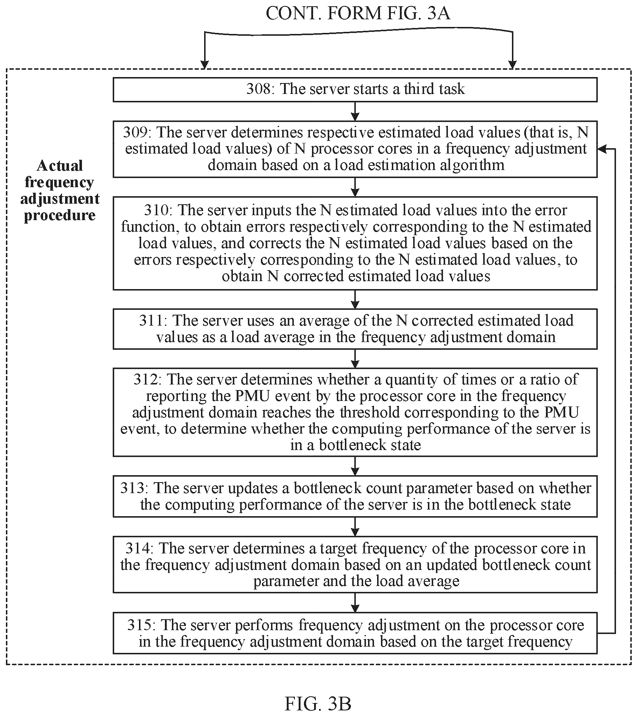

It should be understood that the apparatus in this application may be implemented by using a central processing unit (central processing unit, CPU), an application-specific integrated circuit (application-specific integrated circuit, ASIC), or a programmable logic device (programmable logic device, PLD). The PLD may be a complex programmable logic device (complex programmable logic device, CPLD), a field programmable gate array (field programmable gate array, FPGA), a generic array logic (generic array logic, GAL), or any combination thereof. Alternatively, when the frequency adjustment method shown in FIG. 3A and FIG. 3B may be implemented by using software, the apparatus and the modules in the apparatus may also be software modules.

In a possible implementation, when adjusting the frequency of the processor core based on the load average and the PMU status, the frequency adjustment module 702 is specifically configured to: update a bottleneck count parameter based on the PMU status; determine a target frequency of the processor core in the frequency adjustment domain based on an updated bottleneck count parameter and the load average; and adjust the frequency of the processor core in the frequency adjustment domain based on the target frequency.

In a possible implementation, when updating the bottleneck count parameter based on the PMU status, the frequency adjustment module 702 is specifically configured to: increase the bottleneck count parameter when the PMU status indicates that the running value of the PMU event reported by the processor core in the frequency adjustment domain reaches the threshold corresponding to the PMU event; and/or decrease the bottleneck count parameter when the PMU status indicates that the running value of the PMU event reported by the processor core in the frequency adjustment domain does not reach the threshold corresponding to the PMU event. The target frequency of the processor core in the frequency adjustment domain decreases as the bottleneck count parameter increases, and the target frequency of the processor core in the frequency adjustment domain increases as the bottleneck count parameter decreases.

In a possible implementation, a total quantity of levels of the frequency of the processor core in the frequency adjustment domain is m, a frequency corresponding to a higher level is higher than a frequency corresponding to a lower level in any two levels, and m is a positive integer; and when determining the target frequency of the processor core in the frequency adjustment domain based on the updated bottleneck count parameter and the load average, the frequency adjustment module 702 is specifically configured to: obtain a frequency corresponding to a highest level and a frequency corresponding to a lowest level in m levels; determine, based on the load average and the frequency corresponding to the highest level, a frequency indicated by the load average; and adjust, based on a difference between the frequency corresponding to the highest level and the frequency corresponding to the lowest level, the total quantity of levels, and the updated bottleneck count parameter, the frequency indicated by the load average, to obtain the target frequency.

In a possible implementation, a total quantity of levels of the frequency of the processor core in the frequency adjustment domain is m, a frequency corresponding to a higher level is higher than a frequency corresponding to a lower level in any two levels, and m is the positive integer; and when adjusting the frequency of the processor core in the frequency adjustment domain based on the target frequency, the frequency adjustment module 702 is specifically configured to: select a target level from the m levels based on the target frequency, where the target frequency is between frequencies respectively corresponding to two adjacent levels in the m levels, and the target level is a higher level in the two adjacent levels; and adjust the frequency of the processor core in the frequency adjustment domain to a frequency corresponding to the target level.

In a possible implementation, before obtaining the load average in the frequency adjustment domain, the obtaining module 701 is further configured to: for each processor core in the frequency adjustment domain, obtain an estimated load value of the processor core based on a load estimation algorithm and a historical estimated load value of the processor core; input the estimated load value into an error function, to obtain an error corresponding to the estimated load value; and correct the estimated load value based on the error.

In a possible implementation, before inputting the estimated load value into the error function to obtain the error corresponding to the estimated load value, the obtaining module 701 is further configured to: adjust the processor core to be in an actual load value; obtain the estimated load value of the processor core based on the load estimation algorithm; determine, based on the actual load value of the processor core and the estimated load value of the processor core, an error corresponding to the actual load value of the processor core; and generate the error function based on errors respectively corresponding to a plurality of actual load values of the processor core.

In a possible implementation, before obtaining the PMU status, the obtaining module 701 is further configured to: adjust the processor core to be in a maximum actual load value of the processor core; gradually increase the frequency of the processor core until computing performance of the server reaches a performance bottleneck of the server; and use the running value of the PMU event reported in the frequency adjustment domain when the computing performance of the server reaches the performance bottleneck as the threshold corresponding to the PMU event.

It should be noted that, in embodiments of this application, module division is an example, and is merely a logical function division. In actual implementation, another division manner may be used. Functional modules in embodiments of this application may be integrated into one processing module, each of the modules may exist alone physically, or two or more modules are integrated into one module. The integrated module may be implemented in a form of hardware, or may be implemented in a form of a software functional module.

This application further provides a server (or referred to as a computer device), and the server is configured to perform the method in the method embodiment shown in FIG. 3A and FIG. 3B. FIG. 1 is a diagram of a structure of a server 10. The server 10 includes a processor 101, a storage 102, and a communication interface 103. Any two of the processor 101, the storage 102, and the communication interface 103 may be connected through a bus 104. The bus 400 may be a peripheral component interconnect express (peripheral component interconnect express, PCIe)-based line, or may be another type of bus. For descriptions of the processor 101, the storage 102, and the communication interface 103, refer to the foregoing descriptions about FIG. 1. Details are not described herein again.

This application further provides a processor, where the processor includes a logic circuit and a power supply circuit, the power supply circuit is configured to supply power to the logic circuit, and the logic circuit is configured to perform operation steps of the method implemented by the processor in the method example in FIG. 3A and FIG. 3B. For brevity, details are not described herein again.

This application further provides a chip. The chip is connected to a storage, the chip includes a processor and a cache, and the processor is configured to read and execute computer program code stored in the storage, for example, operation steps of the method implemented by the processor in the method example in FIG. 3A and FIG. 3B. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer program instructions. When the computer program instructions are loaded and executed on a computer, procedure or functions according to embodiments of the present invention are all or partially generated. The computer may be a general-purpose computer, a dedicated computer, a computer network, or another programmable apparatus. The computer program instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid state drive (solid state drive, SSD).

The foregoing descriptions are merely specific implementations of this application. Any variation or replacement readily figured out by a person skilled in the art based on the specific implementations provided in this application shall fall within the protection scope of this application.

**Claims**

1. A frequency adjustment method, wherein the method is performed by a server and comprises:

   obtaining a load average and a performance monitoring unit PMU status in a frequency adjustment domain; and
   adjusting a frequency of a processor core in the frequency adjustment domain based on the load average and the PMU status, wherein
   the load average indicates an average of load values of all processor cores in the frequency adjustment domain when different processor cores execute tasks, and the PMU status indicates whether a running value of a PMU event reported by the processor core in the frequency adjustment domain reaches a threshold corresponding to the PMU event.

2. The method according to claim 1, wherein adjusting the frequency of the processor core based on the load average and the PMU status comprises:

   updating a bottleneck count parameter based on the PMU status;
   determining a target frequency of the processor core in the frequency adjustment domain based on an updated bottleneck count parameter and the load average; and
   adjusting the frequency of the processor core in the frequency adjustment domain based on the target frequency.

3. The method according to claim 2, wherein updating the bottleneck count parameter based on the PMU status comprises:

   increasing the bottleneck count parameter when the PMU status indicates that the running value of the PMU event reported by the processor core in the frequency adjustment domain reaches the threshold corresponding to the PMU event; and/or
   decreasing the bottleneck count parameter when the PMU status indicates that the running value of the PMU event reported by the processor core in the frequency adjustment domain does not reach the threshold corresponding to the PMU event, wherein
   the target frequency of the processor core in the frequency adjustment domain decreases as the bottleneck count parameter increases, and the target frequency of the processor core in the frequency adjustment domain increases as the bottleneck count parameter decreases.

4. The method according to claim 2 or 3, wherein a total quantity of levels of the frequency of the processor core in the frequency adjustment domain is m, a frequency corresponding to a higher level is higher than a frequency corresponding to a lower level in any two levels, and m is a positive integer; and determining the target frequency of the processor core in the frequency adjustment domain based on the updated bottleneck count parameter and the load average comprises:

obtaining a frequency corresponding to a highest level and a frequency corresponding to a lowest level in m levels;
determining, based on the load average and the frequency corresponding to the highest level, a frequency indicated by the load average; and adjusting, based on a difference between the frequency corresponding to the highest level and the frequency corresponding to the lowest level, the total quantity of levels, and the updated bottleneck count parameter, the frequency indicated by the load average, to obtain the target frequency.

5. The method according to any one of claims 2 to 4, wherein a total quantity of levels of the frequency of the processor core in the frequency adjustment domain is m, a frequency corresponding to a higher level is higher than a frequency corresponding to a lower level in any two levels, and m is the positive integer; and adjusting the frequency of the processor core in the frequency adjustment domain based on the target frequency comprises:

selecting a target level from the m levels based on the target frequency, wherein the target frequency is between frequencies respectively corresponding to two adjacent levels in the m levels, and the target level is a higher level in the two adjacent levels; and adjusting the frequency of the processor core in the frequency adjustment domain to a frequency corresponding to the target level.

6. The method according to any one of claims 1 to 5, wherein before obtaining the load average in the frequency adjustment domain, the method further comprises:
for each processor core in the frequency adjustment domain:

obtaining an estimated load value of the processor core based on a load estimation algorithm and a historical estimated load value of the processor core;
inputting the estimated load value into an error function, to obtain an error corresponding to the estimated load value; and
correcting the estimated load value based on the error.

7. The method according to claim 6, wherein before inputting the estimated load value into the error function to obtain the error corresponding to the estimated load value, the method further comprises:

adjusting the processor core to be in an actual load value;
obtaining the estimated load value of the processor core based on the load estimation algorithm;
determining, based on the actual load value of the processor core and the estimated load value of the processor core, an error corresponding to the actual load value of the processor core; and
generating the error function based on errors respectively corresponding to a plurality of actual load values of the processor core.

8. The method according to any one of claims 1 to 7, wherein before obtaining the PMU status, the method further comprises:

adjusting the processor core to be in a maximum actual load value of the processor core;
gradually increasing the frequency of the processor core until computing performance of the server reaches a performance bottleneck of the server; and
using the running value of the PMU event reported in the frequency adjustment domain when the computing performance of the server reaches the performance bottleneck as the threshold corresponding to the PMU event.

9. A frequency adjustment apparatus, wherein the apparatus is comprised in a server, and the apparatus comprises:

an obtaining module, configured to obtain a load average and a performance monitoring unit PMU status in a frequency adjustment domain; and
a frequency adjustment module, configured to adjust a frequency of a processor core in the frequency adjustment domain based on the load average and the PMU status, wherein
the load average indicates an average of load values of all processor cores in the frequency adjustment domain when different processor cores execute tasks, and the PMU status indicates whether a running value of a PMU event reported by the processor core in the frequency adjustment domain reaches a threshold corresponding to the PMU event.

10. A processor, wherein the processor comprises a logic circuit and a power supply circuit, the power supply circuit is configured to supply power to the logic circuit, and the logic circuit is configured to perform operation steps of the method according to any one of claims 1 to 8.

11. A chip, wherein the computer chip comprises a processor and a cache, and the processor is configured to perform operation steps of the method according to any one of claims 1 to 8.

12. A computer device, wherein the computer device comprises a processor, a cache, and a storage, the storage is configured to store computer program code, and the processor is configured to perform operation steps of the method according to any one of claims 1 to 8.

13. A computationally readable storage medium, wherein the computer-readable storage medium comprises instructions, and when the instructions are run on a computer, the computer is enabled to perform operation steps of the method according to any one of claims 1 to 8.

Server 10

Processor 101

Communication interface 103

Bus 104

Storage 102

FIG. 1

| | | | |
|---|---|---|---|
| Virtual file system | | | **User space** |

Power consumption
management module

| Scheduler | Load tracking module | Frequency governor module | | Frequency core module | **Kernel space** |
|---|---|---|---|---|---|
| | | Performance first | Power consumption first | | |
| | | User-defined setting | On-demand allocation | Frequency driver module | |
| | | Smooth adjustment | Load frequency adjustment | | |

| BIOS power management module | Power consumption–related register | PCU | **Hardware layer** |
|---|---|---|---|

FIG. 2

**Error function generation procedure**

301: A server starts a first task

302: The server adjusts, for K times, a computing amount requested by the first task per unit time, to obtain K actual load values respectively corresponding to the K times of adjustment of a processor core

303: The server determines, based on the K actual load values and K estimated load values corresponding to the K actual load values, errors respectively corresponding to the K actual load values

304: The server obtains an error function through fitting based on the K actual load values and the errors respectively corresponding to the K actual load values

**Input the error function**

**PMU event threshold generation procedure**

305: The server starts a second task

306: The server adjusts a computing amount requested by the second task per unit time, so that an actual load value of the processor core reaches a maximum, and the server gradually increases a frequency of the processor core until computing performance of the server reaches a performance bottleneck

307: The server determines a running value of a PMU event reported by the processor core when the computing performance reaches the performance bottleneck as a threshold corresponding to the PMU event

**Input the threshold corresponding to the PMU event**

TO FIG. 3B

FIG. 3A

EP 4 621 530 A1

EP 4 621 530 A1

CONT. FORM FIG. 3A

**Actual frequency adjustment procedure**

308: The server starts a third task

309: The server determines respective estimated load values (that is, N estimated load values) of N processor cores in a frequency adjustment domain based on a load estimation algorithm

310: The server inputs the N estimated load values into the error function, to obtain errors respectively corresponding to the N estimated load values, and corrects the N estimated load values based on the errors respectively corresponding to the N estimated load values, to obtain N corrected estimated load values

311: The server uses an average of the N corrected estimated load values as a load average in the frequency adjustment domain

312: The server determines whether a quantity of times or a ratio of reporting the PMU event by the processor core in the frequency adjustment domain reaches the threshold corresponding to the PMU event, to determine whether the computing performance of the server is in a bottleneck state

313: The server updates a bottleneck count parameter based on whether the computing performance of the server is in the bottleneck state

314: The server determines a target frequency of the processor core in the frequency adjustment domain based on an updated bottleneck count parameter and the load average

315: The server performs frequency adjustment on the processor core in the frequency adjustment domain based on the target frequency

FIG. 3B

24

FIG. 4

FIG. 5

FIG. 6

Obtaining module 701

Frequency adjustment
module 702

FIG. 7

## INTERNATIONAL SEARCH REPORT

| International application No. |
| --- |
| **PCT/CN2023/121414** |

| A. | CLASSIFICATION OF SUBJECT MATTER |
| --- | --- |

G06F1/3234(2019.01)i;  G06F9/50(2006.01)i;  G06F11/30(2006.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; CNKI; DWPI; ENTXT; USTXT; WOTXT; EPTXT; IEEE: 处理器, 负载, 平均, 性能, 上限, 瓶颈, 监控, 频率, 调整, CPU, load, average, performance, bottleneck, limit, monitor, frequency, calibration, adjust

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105677000 A (HUAWEI TECHNOLOGIES CO., LTD.) 15 June 2016 (2016-06-15) description, paragraphs [0005]-[0112] | 1-13 |
| X | CN 113434286 A (NANJING YIZHI NETWORK SPACE TECHNOLOGY INNOVATION RESEARCH INSTITUTE CO., LTD.) 24 September 2021 (2021-09-24) description, paragraphs [0075]-[0101] | 1-13 |
| A | CN 113867938 A (SUZHOU INSPUR INTELLIGENT TECHNOLOGY CO., LTD.) 31 December 2021 (2021-12-31) entire document | 1-13 |
| A | CN 102184125 A (CAPITAL NORMAL UNIVERSITY) 14 September 2011 (2011-09-14) entire document | 1-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 November 2023** | **05 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121414**

| Patent document cited in search report | | | Publication date (day/month/year) | Patent family member(s) | | | Publication date (day/month/year) |
|---|---|---|---|---|---|---|---|
| CN | 105677000 | A | 15 June 2016 | CN | 105677000 | B | 19 October 2018 |
| CN | 113434286 | A | 24 September 2021 | None | | | |
| CN | 113867938 | A | 31 December 2021 | None | | | |
| CN | 102184125 | A | 14 September 2011 | CN | 102184125 | B | 13 November 2013 |

Form PCT/ISA/210 (patent family annex) (July 2022)

**EP 4 621 530 A1**

**REFERENCES CITED IN THE DESCRIPTION**

**Patent documents cited in the description**

- CN 202211676674